# EUROPÄISCHE PATENTSCHRIFT

(11) **EP 1 952 010 B1**
(45) Veröffentlichungstag und Bekanntmachung des Hinweises auf die Patenterteilung: **14.10.2009**
(21) Anmeldenummer: 06818768.1
(22) Anmeldetag: 23.11.2006
(51) Int. Cl.: F02M 37/22

(54) **FILTER, INSBESONDERE KRAFTSTOFFFILTER**
FILTER, ESPECIALLY FUEL FILTER
FILTRE, NOTAMMENT FILTRE A CARBURANT

(30) Priorität: 23.11.2005 DE 202005018435 U
(43) Veröffentlichungstag der Anmeldung: 06.08.2008
(73) Patentinhaber: Filtertek, S.A., F-60128 Plailly (FR)
(72) Erfinder: CHIGA, Antonio, F-60520 Pontarme (FR)
(74) Vertreter: Brose, D. Karl
(86) Internationale Anmeldenummer: PCT/EP2006/011248
(87) Internationale Veröffentlichungsnummer: WO 2007/059969

(56) Entgegenhaltungen:
- EP-A- 1 239 145
- FR-A1- 2 812 822
- US-A- 5 695 638

## Beschreibung

Die Erfindung betrifft einen Filter, insbesondere Kraftstofffilter, mit einem aus einem Oberteil und einem Unterteil bestehenden Gehäuse aus einem geeigneten Kunststoff und einem ziehharmonikaähnlich gefalteten Filterelement in dem Gehäuse, welches einen Einlass von einem Auslass trennt, wobei das Oberteil mit dem Unterteil durch Schweißen oder dergleichen verbunden ist.

Derartige Filter sind allgemein bekannt wie z.B. im Dokument FR-2812822, und werden als sogenannte Lifetime-Filter zum Filtern von Kraftstoffen, insbesondere bei Verbrennungsmaschinen mit Kraftstoffeinspritzung verwendet. Üblicherweise ist hierbei das ziehharmonikaähnlich gefaltete Filterelement in dem Gehäuse zwischen einem Oberteil und einem Unterteil ringförmig angeordnet, wobei bei bekannten Filtern dieser Art auf der oberen Stirnseite des Filterelementes ein zusätzlicher Ring aus Kunststoff vorgesehen ist, welcher die Abdichtung zwischen der Einlassseite und Auslassseite sicherstellt, wobei dieses ringförmige Kunststoffelement flexibel ausgebildet ist und eine axiale Druckspannung auf das Filterelement ausübt. Hierdurch soll vermieden werden, dass sich bei höheren Temperaturen aufgrund der axialen Dehnung des Gehäuses Leckstellen zwischen Einlass und Auslass bilden.

Der Erfindung liegt die Aufgabe zugrunde, einen Filter der oben genannten Art dadurch zu verbessern, dass dieser mit sehr viel geringerem Aufwand herstellbar ist.

Diese Aufgabe wird bei einem Filter der oben genannten Art im Wesentlichen dadurch gelöst, dass die Stirnseiten des Filterelementes unmittelbar mit dem einander gegenüberliegenden Stirnwandungen des Gehäuses verbunden sind.

Hierdurch wir der Vorteil erzielt, dass das zusätzliche Kunststoffelement auf der oberen Stirnseite des Filterelementes nicht mehr notwendig ist, da die unmittelbare Verbindung zwischen Gehäuse und Filterelement auf jeden Fall die absolute Dichtigkeit gewährleistet. Diese Ausgestaltung ist aufgrund der Erkenntnis möglich, dass die axiale Längenänderung des Gehäuses aufgrund von Druck oder thermischer Einwirkungen oder chemischer Vorgänge hier keine Auswirkung hinsichtlich der Dichtigkeit hat, da gefunden wurde, dass diese Längenänderung keine Leckstellen erzeugt, sondern sich das Gehäuse eher ballonähnlich aufbläst. Der Filter nach der Erfindung besteht daher nicht mehr, wie üblich, aus vier Einzelteilen, sondern lediglich aus den beiden Gehäuseteilen und dem Filterelement.

Eine besonders bevorzugte Ausführungsform nach der Erfindung kann dadurch geschaffen werden, dass das Oberteil mit dem Unterteil durch Spiegelschweißen und das Filterelement mit dem Gehäuse durch Infrarotschweißen verbunden ist. Hierdurch wird der Vorteil erreicht, dass, nachdem diese beiden Verschweißungen gleichzeitig durchgeführt werden können, die Herstellung des Filters quasi in einem einzigen Arbeitsgang und entsprechender Form durchführbar ist.

Bei einer vorteilhaften Weiterbildung nach der Erfindung besteht das Filterelement aus Papier, Gewebe oder Siebmaterial.

Im Einzelnen ist es bevorzugt, dass das Gehäuse aus POM besteht.

Eine besonders vorteilhafte Ausführungsform nach der Erfindung kann dadurch geschaffen werden, dass die Stirnwandungen in je einer Schweißzone eine vergrößerte Wandstärke aufweisen. Hierdurch wird eine besonders sichere Verschweißung der beiden Stirnseiten des Filterelementes mit dem Gehäuse gewährleistet, da zu diesem Zweck zusätzliches Material vorhanden ist.

Im Einzelnen ist es ferner bevorzugt, dass das Filterelement unter axialer Druckspannung zwischen den Stirnwandungen gehalten ist. Einerseits wird hierdurch der Vorteil erzielt, dass das Infrarotschweißen der Stirnseiten des Filterelementes mit den Stirnwandungen des Gehäuses zusätzlich hinsichtlich der Dichtigkeit abgesichert wird, und dass ferner die geringe Druckspannung, welche im Filterelement möglicherweise nach der Herstellung verbleibt, einen zusätzlichen Ausgleich für Längenänderungen bietet.

Bei der bevorzugten Ausführungsform ist die vergrößerte Wandstärke der Stirnwandungen als in dem Innenraum des Gehäuses vorstehende Verstärkung ausgebildet.

Im Folgenden wird die Erfindung an Hand einer in den Zeichnungen beispielhaft veranschaulichten Ausführungsform näher erläutert. Es zeigt:
FIGUR 1 eine schematische seitliche Schnittansicht eines Filters nach der Erfindung;
FIGUR 2 eine schematische Querschnittsansicht des Filters gemäß Figur 1 etwa in der Ebene der Verbindungsfuge zwischen den Gehäuseteilen, und
FIGUR 3 im vergrößerten Maßstab eine Einzelheit von Figur 1.

Wie in den Zeichnungen gezeigt, weist die beispielhafte Ausführungsform des Filters 1 ein Gehäuse 2 aus einem geeigneten Kunststoff auf, welches aus einem Oberteil 4 und einem Unterteil 6 besteht. In dem Gehäuse 2 ist in einem Ringraum 7 ein ziehharmonikaähnlich gefaltetes Filterelement 8 angeordnet, welches einen Einlass 10 des Gehäuses 2 von einem Auslass 12 trennt. Das Oberteil 4 ist mit dem Unterteil 6 in einer Schweißzone 14 durch Schweißen verbunden.

Wie gezeigt, sind die Stirnseiten 16 und 18 des Filterelementes 8 direkt mit den einander gegenüberliegenden Stirnwandungen 20 und 22 des Gehäuses 2 verbunden, ohne dass ein zusätzlicher Zwischenring oder dergleichen vorgesehen ist.

Das Oberteil 4 ist mit dem Unterteil 6 bevorzugt durch Spiegelschweißen verbunden. Das Filterelement 8 ist an seiner Stirnseite 16 mit der gegenüberliegenden Stirnwandung 20 des Oberteiles 4 durch Infrarotschweißen verbunden und die gegenüberliegende Stirnseite 18 des Filterelementes 8 ist mit der gegenüberliegenden Stirnwandung 22 des Unterteils 6 ebenfalls durch Infrarotschweißen verbunden, wobei diese Schweißverbindungen in einer oberen Schweißzone 24 bzw. einer unteren Schweißzone 26 erfolgen. Die Schweißzonen 24 und 26 sind entsprechend den Stirnseiten 16 und 18 bzw. den Stirnwandungen 20 und 22 ebenfalls ringförmig ausgebildet.

Das Filterelement 8 kann aus Papier, Gewebe oder Siebmaterial bestehen und das Gehäuse 2 besteht bevorzugt aus POM.

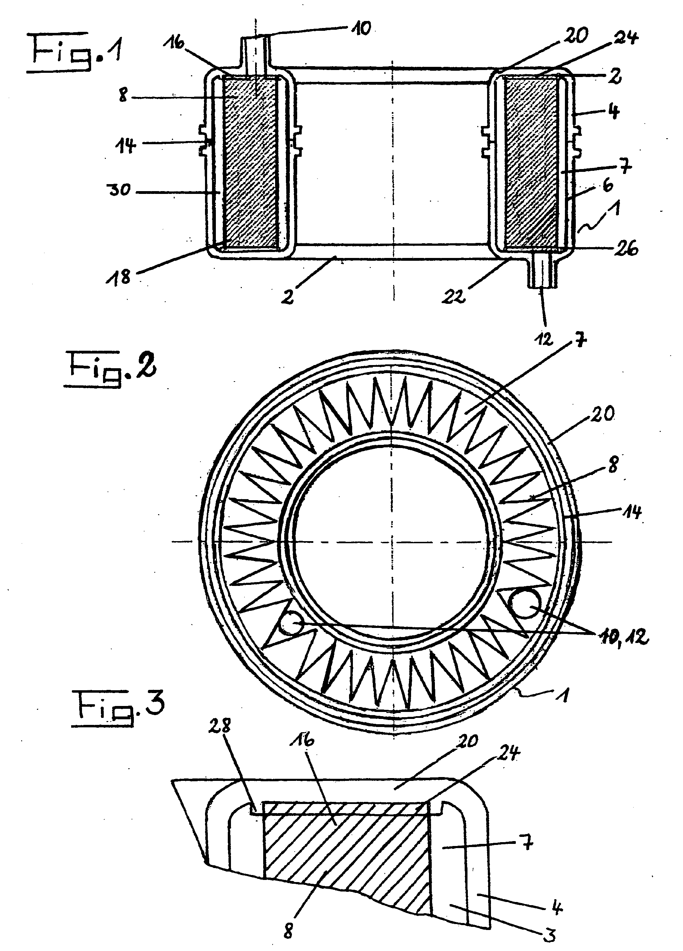

Wie gezeigt und insbesondere aus Figur 3 ersichtlich, weisen die Stirnwandungen 20 und 22 in den Schweißzonen 24 und 26 eine vergrößerte Wandstärke auf, welche beim Ausführungsbeispiel als in den Innenraum 30 vorstehende Verstärkung 28 ausgebildet ist. Diese Verstärkung 28 in den Schweißzonen 24 und 26 gewährleistet, dass eine ausreichende Materialmenge für das Infrarotschweißen zur Verbindung der Stirnseiten 16 und 18 des Filterelementes 8 vorhanden ist.

Weiterhin ist bevorzugt, das Filterelement 8 unter, wenn möglicherweise auch geringer axialer Druckspannung zwischen den Stirnwandungen 20 und 22 zu halten, wodurch eine sichere Verbindung der Stirnseiten 16 und 18 des Filterelementes 8 beim Infrarotschweißen gewährleistet ist.

Zur Herstellung des Filters 1 wird zunächst das Filterelement 8 in den Unterteil 6 oder den Oberteil 4 eingesetzt und der jeweils andere Teil 4 oder 6 darüber angeordnet und anschließend die hierdurch hergestellte Einheit in eine Einrichtung eingelegt. Die Einrichtung ist sowohl mit einer Vorrichtung zum Spiegelschweißen in der Schweißzone 14 als auch einer Vorrichtung zum Infrarotschweißen in den Schweißzonen 24 und 26 versehen. Nach dem Einsetzen der aus Oberteil 4, Unterteil 6 und Filterelement 8 bestehenden Einheit wird das Oberteil 4 auf das Unterteil 6 aufgedrückt und somit eine axiale Druckspannung in dem zwischen den Stirnwandungen 20 und 22 gehaltenen Filterelement 8 erzeugt. Danach wird gleichzeitig das POM von Oberteil 4 und Unterteil 6 in der Schweißzone 14 durch Spiegelschweißen verschweißt, während in den Schweißzonen 24 und 26 das Infrarotschweißen durchgeführt wird, durch welches die Stirnseiten 16 und 18 des Filterelementes 8 mit den Stirnwandungen 20 und 22 des Gehäuses 2 mediendicht verbunden wird.

Es ist offensichtlich, dass hierdurch die Herstellung des Filters 1 gemäß der Erfindung erheblich vereinfacht wird und zusätzlich die Formkosten für ein zusätzliches Element gespart werden.

### BEZUGSZEICHENLISTE

1 = Filter
2 = Gehäuse
4 = Oberteil
6 = Unterteil
7 = Ringraum
8 = Filterelement
10 = Einlass
12 = Auslass
14 = Schweißzone
16 = Stirnseite
18 = Stirnseite
20 = Stirnwandung
22 = Stirnwandung
24 = obere Schweißzone
26 = untere Schweißzone
28 = Verstärkung
30 = Innenraum

## Patentansprüche

1. Filter, insbesondere Kraftstofffilter, mit einem aus einem Oberteil (4) und einem Unterteil (6) bestehenden Gehäuse (2) aus einem geeigneten Kunststoff und einem ziehharmonikaähnlich gefalteten Filterelement (8) in dem Gehäuse (2), welches einen Einlass (10) von einem Auslass (12) trennt, wobei das Oberteil (4) mit dem Unterteil (6) durch Schweißen oder dergleichen verbunden ist, **dadurch gekennzeichnet, dass** die Stirnseiten (16, 18) des Filterelements (8) unmittelbar mit den einander gegenüberliegenden Stirnwandungen des Gehäuses (2) verbunden sind.

2. Filter nach Anspruch 1, **dadurch gekennzeichnet, dass** das Oberteil (4) mit dem Unterteil (6) durch Spiegelschweißen und das Filterelement (8) mit dem Gehäuse (2) durch Infrarotschweißen verbunden ist.

3. Filter nach Anspruch 1 oder 2, **dadurch gekennzeichnet, dass** das Filterelement (8) aus Papier, Gewebe oder Siebmaterial besteht.

4. Filter nach einem der vorstehenden Ansprüche, **dadurch gekennzeichnet, dass** das Gehäuse (2) aus POM besteht.

5. Filter nach einem der vorstehenden Ansprüche, **dadurch gekennzeichnet, dass** die Stirnwandungen (20, 22) in je einer Schweißzone (24, 26) eine vergrößerte Wandstärke aufweisen.

6. Filter nach Anspruch 5, **dadurch gekennzeichnet, dass** die vergrößerte Wandstärke als in den Innenraum (30) des Gehäuses (2) vorstehende Verstärkung (28) ausgebildet ist.

7. Filter nach einem der vorstehenden Ansprüche, **dadurch gekennzeichnet, dass** das Filterelement (8) unter axialer Druckspannung zwischen den Stirnwandungen (20, 22) gehalten ist.

## Claims

1. Filter, in particular fuel filter, having a housing (2), which is composed of an upper part (4) and a lower part (6) and which is produced from a suitable plastic, and having a filter element (8) in the housing (2), which filter element (8) is folded in the manner of an accordion and separates an inlet (10) from an outlet (12), with the upper part (4) being connected to the lower part (6) by welding or the like, **characterized in that** the end sides (16, 18) of the filter element (8) are connected directly to the end walls, which are situated opposite one another, of the housing (2).

2. Filter according to Claim 1, **characterized in that** the upper part (4) is connected to the lower part (6) by butt-welding with heat reflectors, and the filter element (8) is connected to the housing (2) by infrared welding.

3. Filter according to Claim 1 or 2, **characterized in that** the filter element (8) is composed of paper, fabric or sieve material.

4. Filter according to one of the preceding claims, **characterized in that** the housing (2) is composed of POM.

5. Filter according to one of the preceding claims, **characterized in that** the end walls (20, 22) have an increased wall thickness in in each case one welding zone (24, 26).

6. Filter according to Claim 5, **characterized in that** the increased wall thickness is formed as a thickened portion (28) which projects into the interior space (30) of the housing (2).

7. Filter according to one of the preceding claims, **characterized in that** the filter element (8) is held between the end walls (20, 22) under axial compressive load.

## Revendications

1. Filtre, en particulier filtre à carburant, comprenant un boîtier (2) constitué d'une partie supérieure (4) et d'une partie inférieure (6), en un plastique approprié et un élément de filtre (8) plié en forme d'accordéon dans le boîtier (2), lequel sépare une entrée (10) d'une sortie (12), la partie supérieure (4) étant connectée à la partie inférieure (6) par soudage ou similaire, **caractérisé en ce que** les côtés frontaux (16, 18) de l'élément de filtre (8) sont directement connectés aux parois frontales mutuellement opposées du boîtier (2).

2. Filtre selon la revendication 1, **caractérisé en ce que** la partie supérieure (4) est connectée à la partie inférieure (6) par soudure miroir et l'élément de filtre (8) est connecté au boîtier (2) par soudage infrarouge.

3. Filtre selon la revendication 1 ou 2, **caractérisé en ce que** l'élément de filtre (8) se compose de papier, de tissu ou de matériau en toile.

4. Filtre selon l'une quelconque des revendications précédentes, **caractérisé en ce que** le boîtier (2) se compose de POM.

5. Filtre selon l'une quelconque des revendications précédentes, **caractérisé en ce que** les parois frontales (20, 22) présentent, dans chaque zone de soudage (24, 26), une épaisseur de paroi accrue.

6. Filtre selon la revendication 5, **caractérisé en ce que** l'épaisseur de paroi accrue est réalisée sous forme de renforcement (28) saillant dans l'espace interne (30) du boîtier (2).

7. Filtre selon l'une quelconque des revendications précédentes, **caractérisé en ce que** l'élément de filtre (8) est maintenu sous contrainte de pression axiale entre les parois frontales (20, 22).
